# EUROPEAN PATENT APPLICATION

(11) **EP 3 495 405 A1**
(43) Date of publication of application: **12.06.2019**
(21) Application number: 17206262.2
(22) Date of filing: 08.12.2017
(51) Int. Cl.: C08G 69/14, C08G 69/16

(54) **METHOD OF PRODUCING POLYAMIDE MATERIAL WITH PEPTIDES, AND POLYAMIDE MATERIAL WITH PEPTIDES**

(71) Applicant: Camangi Corporation, Taipei City 106 (TW)
(72) Inventor: Hou, Erh-Jen, 106 Taipei City (TW)
(74) Representative: Altenburg, Bernardus Stephanus Franciscus

(57) **Abstract**

A method of producing polyamide material with peptides is disclosed. The method includes: mixing a peptide material and water to form a peptide solution; mixing caprolactam and the peptide solution to form a first solution; adding a catalyst into the first solution to form a second solution; adding an antioxidant into the second solution to form a third solution; causing a ring-opening reaction in the third solution; heating the third solution to a dehydration temperature to dewater the third solution; forming a polyamide material with peptides.

## Description

### BACKGROUND OF THE INVENTION

### Field of the Invention

The present invention relates to a method of producing polyamide material, particularly to a method of producing polyamide material with peptides which can produce a polyamide material with peptides suitable for the production of textiles.

### Description of the Related Art

Nylon is a kind of macromolecule condensation polymer with many varieties and a wide range of applications, and its total output ranks first in the world of engineering plastics. Nylon is made of units linked by amide bonds, and thus it is a polyamide. The main types of nylon include Nylon-6 (polycaprolactam), Nylon-66, Nylon-610, Nylon-12, Nylon-1010, Nylon-43, and so on, of which Nylon-6 is the most widely used in textiles (e.g., sportswear and pantyhose). However, the skin-friendly and breathable properties of conventional Nylon-6 are not particularly outstanding. Compared to apparel made of animal or vegetable fibers such as wool or cotton, clothing made of Nylon-6 still lacks elasticity, comfort and coolness; thus, clothing made of Nylon-6 is comparably less attractive to consumers.
Therefore, it is necessary to provide a new method of producing polyamides which can produce a polyamide material with better elasticity and better skin-friendly and breathable properties which is suitable for the production of nylon textiles.

### SUMMARY OF THE INVENTION

It is a major objective of the present invention to provide a method of producing polyamide material with peptides which can produce a polyamide material with peptides suitable for the production of textiles.

To achieve the above objective, a method of producing polyamide material with peptides of the present invention includes: mixing a peptide material and water to form a peptide solution; mixing caprolactam and the peptide solution to form a first solution; adding a catalyst into the first solution to form a second solution; adding an antioxidant into the second solution to form a third solution; causing a ring-opening reaction in the third solution; heating the third solution to a dehydration temperature to dewater the third solution; forming a polyamide material with peptides.

According to an embodiment of the present invention, the step of causing the ring-opening reaction in the third solution further includes: heating the third solution to a specific temperature; and pressurizing the third solution to a specific pressure.

According to an embodiment of the present invention, the step of causing the ring-opening reaction in the third solution further includes: holding the third solution at a specific temperature and pressure for a specific time.

According to an embodiment of the present invention, the method of producing polyamide material with peptides further includes: reducing the temperature and pressure of the dehydrated third solution to normal temperature and normal pressure.

According to an embodiment of the present invention, in the peptide solution, the weight ratio of peptide material to water is 1:10. According to an embodiment of the present invention, the weight ratio of peptide solution to caprolactam is 3-10:100.

According to an embodiment of the present invention, the peptide material is Proline, Glycine or Alanine.

According to an embodiment of the present invention, the catalyst is selected from Sodium Carbonate, Sodium Hydrogen Carbonate, Trisodium Phosphate, Sodium Hydrogen Phosphate, Sodium Dihydrogen Phosphate or a combination thereof.

According to an embodiment of the present invention, the specific temperature is in a range of 220°C to 255°C.

According to an embodiment of the present invention, the dehydration temperature is in a range of 220°C to 260°C.

According to an embodiment of the present invention, the specific pressure is in a range of 1.2 MPa to 1.8 MPa.

According to an embodiment of the present invention, the specific time is in a range of 1 to 3 hours.

According to an embodiment of the present invention, the source of the peptide material is vertebrate protein.

It is another object of the present invention to provide a polyamide material with peptides suitable for the production of textiles.

To achieve the above objective, the polyamide material with peptides of the present invention is produced by the method of producing the polyamide material with peptides described above.

### BRIEF DESCRIPTION OF THE DRAWINGS

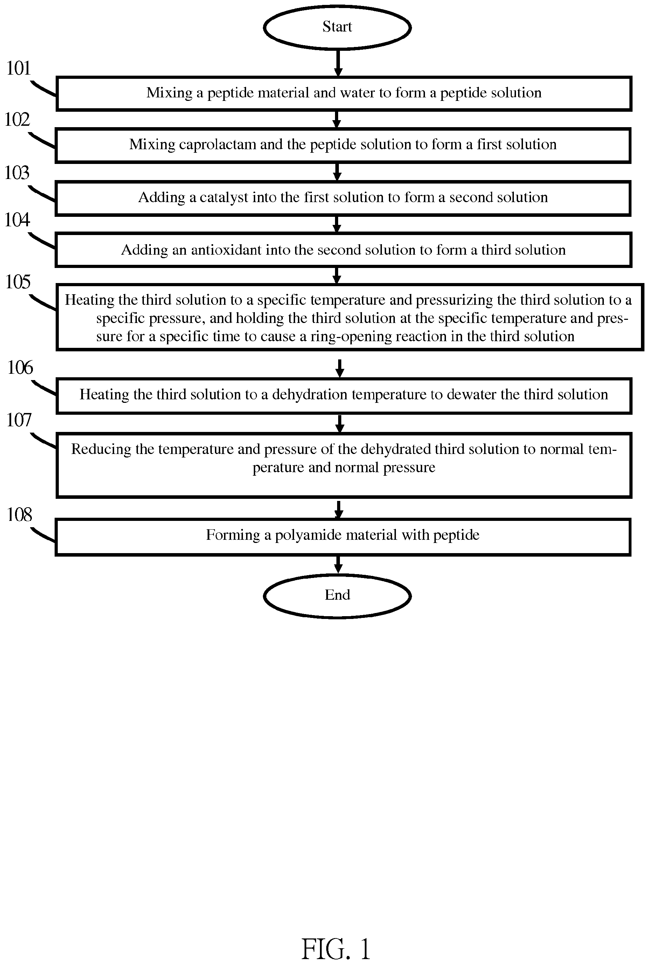

FIG. 1 is a flowchart showing steps in the method of producing polyamide material with peptides according to an embodiment of the present invention.

### DETAILED DESCRIPTION OF THE PREFERRED EMBODIMENT

Hereafter, the other advantages and effects of the present invention will be better understood by those skilled in the art with reference to preferred embodiments.

Hereafter, please refer to FIG. 1, which is a flowchart showing steps in the method of producing polyamide material with peptides according to an embodiment of the present invention.

As shown in FIG. 1, in an embodiment of the present invention, the method of producing polyamide material with peptides is used for producing a polyamide material with improved quality. The polyamide material contains peptides and has excellent elasticity and skin-friendly and breathable properties which are suitable for the production of nylon textiles (such as clothing) for users to wear. To implement the method of producing polyamide material with peptides of the present invention, the method begins with Step 101: Mixing a peptide material and water to form a peptide solution.

In an embodiment of the present invention, to produce a polyamide material with peptides, the peptide material and water are mixed to form a peptide solution; in the present embodiment, the weight ratio of the peptide material to water is 1:10. The peptide material of the present invention is, for example, Proline, Glycine, or Alanine. In the present invention, the source of peptide material is vertebrate protein. The peptide material is used in the polyamide material with peptides of the present invention as a source of animal amino acids. However, the type of peptide material is not limited to the above and may be other types of peptides.

Then the method continues with Step 102: Mixing caprolactam and the peptide solution to form a first solution.

In an embodiment of the present invention, caprolactam and the peptide solution are mixed to form a first solution. In the present invention, the weight ratio of peptide solution to caprolactam is 3-10:100, but the weight ratio is not limited thereto, and the numerical proportion may be changed according to design requirements.

Then the method continues with Step 103: Adding a catalyst into the first solution to form a second solution.

In an embodiment of the present invention, a catalyst is added into the first solution to form a second solution. The catalyst is used to cause the ring-opening reaction in the solution of the present invention. The catalyst is selected from Sodium Carbonate, Sodium Hydrogen Carbonate, Trisodium Phosphate, Sodium Hydrogen Phosphate, Sodium Dihydrogen Phosphate or a combination thereof, but the type of the catalyst is not limited to the above and may be another material that can cause the ring-opening reaction.

Then the method continues with Step 104: Adding an antioxidant into the second solution to form a third solution.

In an embodiment of the present invention, an antioxidant is added into the second solution to form a third solution. The antioxidant is used to increase the oxidation resistance of the finally formed polyamide material with peptides of the present invention and to prevent the oxidation of the product of the present invention at a later reaction so as to prevent the product from being discolored or deteriorated by oxidation. In this way, the quality of the textile made of the polyamide material with peptides produced by the present invention can be further improved. The antioxidant in the present embodiment may be a commercially available phenolic antioxidant (e.g., Pentaerythritol tetrakis (4-hydroxy-3, 5-t-butylphenylpropionate), commonly known as antioxidant 1010), or phosphorus and sulfur antioxidant (e.g., WestonTNPP and Irgafos168), but the type of antioxidant is not limited thereto.

Then the method continues with Step 105: Heating the third solution to a specific temperature, pressurizing the third solution to a specific pressure, and holding the third solution at the specific temperature and pressure for a specific time to cause a ring-opening reaction in the third solution.

In an embodiment of the present invention, after the antioxidant is added into the second solution to form the third solution, the third solution is heated to a specific temperature, pressurized to a specific pressure, and held at a specific temperature and a specific pressure for a specific time to cause a ring-opening reaction in the third solution. In the present invention, the specific temperature is in a range of 220°C to 255°C, the specific pressure is in a range of 1.2 MPa to 1.8 MPa, and the specific time is in a range of 1 to 3 hours; however, the range of the specific temperature, the specific pressure, and the specific time is not limited thereto and can be increased or decreased according to product demands. When the temperature and pressure of the third solution are increased to the range of the specific temperature and the specific pressure, the amount of energy in the third solution is sufficient for the catalyst and the peptide solution to cause the ring-opening reaction of the caprolactam in the third solution. It should be noted that in the traditional ring-opening reaction of caprolactam, caprolactam works with pure water to cause the ring-opening reaction. However, during the ring-opening reaction of caprolactam in the present invention, caprolactam reacts with the peptide solution to cause the ring-opening reaction. As a result, animal amino acids in the peptide solution can affect the properties of the subsequently formed polyamides.

Then the method continues with Step 106: Heating the third solution to a dehydration temperature to dewater the solution.

In an embodiment of the present invention, when the third solution has been held at the specific temperature and the specific pressure for the specific time, the third solution will undergo the ring-opening reaction to generate Aminocaproic Acid. Once the ring-opening reaction has occurred, the third solution is further heated to a dehydration temperature to dewater the third solution and allow condensation polymerization and addition reaction between Aminocaproic Acid and animal amino acids in the peptide solution. In the present invention, the dehydration temperature is in a range of 220°C to 260°C; however, the range of the dehydration temperature is not limited thereto and can be increased or decreased according to product demands.

Then the method continues with Step 107: Reducing the temperature and pressure of the dehydrated third solution to normal temperature and normal pressure.

In an embodiment of the present invention, after the third solution is dewatered, the temperature and pressure of the dehydrated third solution are reduced to normal temperature and normal pressure for subsequent processing. In the present invention, the normal temperature is a normal room temperature in a range of, for example, 16°C to 30°C, and the normal pressure is atmospheric pressure.

Finally, the method continues with Step 108: Forming a polyamide material with peptides.

In an embodiment of the present invention, when the third solution is dehydrated to undergo condensation polymerization and addition reaction and then lowered to normal temperature and atmospheric pressure, the Aminocaproic Acid in the third solution will be completely reacted with the animal amino acids in the peptide solution to form a polyamide material with peptides; that is, modified peptides-containing Nylon-6. The polyamide material with peptides has animal amino acids with peptides, such that the physical property of a polyamide material with peptides is different from traditional Nylon-6. The polyamide material with peptides of the present invention has superior comfort, hydrophilicity, coolness and elasticity for human skin; thus, the polyamide material of the present invention can be used for spinning and weaving to make high quality clothing, netting or silk.

The polyamide material with peptides produced by the method of producing polyamide material with peptides of the present invention has superior comfort, hydrophilicity, coolness and elasticity for human skin; thus, the polyamide material with peptides of the present invention can be used for spinning and weaving to make high quality clothing, netting or silk. Accordingly, the problem of the lack of elasticity, comfort and coolness of traditional nylon clothing can be overcome.

It should be noted that the embodiments of the present invention described above are only illustrative. Those skilled in the art will recognize that the method of producing the polyamide material with peptides of the present invention can be changed or modified without departing from the scope of the invention as defined by the appended claims.

## Claims

1. A method of producing polyamide material with peptides, comprising the steps of:
mixing a peptide material and water to form a peptide solution;
mixing caprolactam and the peptide solution to form a first solution;
adding a catalyst into the first solution to form a second solution, wherein the catalyst is selected from Sodium Carbonate, Sodium Hydrogen Carbonate, Trisodium Phosphate, Sodium Hydrogen Phosphate, Sodium Dihydrogen Phosphate or a combination thereof;
adding an antioxidant into the second solution to form a third solution;
causing a ring-opening reaction in the third solution; heating the third solution to a dehydration temperature to dewater the third solution; and
forming a polyamide material with peptides.

2. The method of producing polyamide material with peptides as claimed in claim 1, wherein the step of causing a ring-opening reaction in the third solution further comprises:
heating the third solution to a specific temperature; and
pressurizing the third solution to a specific pressure.

3. The method of producing polyamide material with peptides as claimed in claim 2, wherein the step of causing a ring-opening reaction in the third solution further comprises: holding the third solution at the specific temperature and pressure for a specific time.

4. The method of producing polyamide material with peptides as claimed in claim 3, further comprising the step of:
reducing the temperature and pressure of the dehydrated third solution to normal temperature and normal pressure.

5. The method of producing polyamide material with peptides as claimed in claim 4, wherein in the peptide solution, the weight ratio of the peptide material to water is 1:10.

6. The method of producing polyamide material with peptides as claimed in claim 5, wherein the weight ratio of the peptide solution to caprolactam is 3-10:100.

7. The method of producing polyamide material with peptides as claimed in claim 6, wherein the peptide material is Proline, Glycine or Alanine.

8. The method of producing polyamide material with peptides as claimed in claim 7, wherein the specific temperature is in a range of 220°C to 255°C.

9. The method of producing polyamide material with peptides as claimed in claim 8, wherein the dehydration temperature is in a range of 220°C to 260°C.

10. The method of producing polyamide material with peptides as claimed in claim 9, wherein the specific pressure is in a range of 1.2 MPa to 1.8 MPa.

11. The method of producing polyamide material with peptides as claimed in claim 10, wherein the specific time is in a range of 1 to 3 hours.

12. The method of producing polyamide material with peptides as claimed in claim 11, wherein the source of the peptide material is vertebrate protein.
